# EUROPÄISCHE PATENTANMELDUNG

(11) **EP 0 979 676 A1**
(43) Veröffentlichungstag der Anmeldung: **16.02.2000**
(21) Anmeldenummer: 98115222.6
(22) Anmeldetag: 13.08.1998
(51) Int. Cl.: B03B 9/06

(54) **Verfahren und Vorrichtung zur mechanischen Aufbereitung eines Materialstromes**

(71) Anmelder: Trentec Wertstoffrückgewinnungsanlage AG, 82041 Oberhaching (DE)
(72) Erfinder: Stahl, Martin, 51103 Köln (DE); Spengler, Heinz Christian, 89350 Mindelaltheim (DE); Trimborn, Stefan, 99510 Mattstedt (DE)
(74) Vertreter: Heldt, Gert, Dr. Dipl.-Ing.

(57) **Zusammenfassung**

Die Erfindung betrifft ein Verfahren und eine Vorrichtung zur mechanischen Aufbereitung eines Materialstromes von zu recycelnden, insbesondere Metall enthaltenden Verbundstoffen, bei dem in einem ersten Schritt die Verbundstoffe grob zerkleinert und in folgenden weiteren Schritten fein zerkleinert und getrennt werden.

Vor dem Feinzerkleinern wird der Materialstrom (7) von einem Windsichter (5) in eine schwere Grobfraktion (25) und eine leichte Feinfraktion (24), die getrennt weiter behandelt werden, aufgeteilt.

## Beschreibung

Die Erfindung betrifft ein Verfahren zur mechanischen Aufbereitung eines Materialstromes von zu recycelnden, insbesondere Metall enthaltenden Verbundstoffen, bei dem in einem ersten Schritt die Verbundstoffe grob zerkleinert und in folgenden weiteren Schritten fein zerkleinert und getrennt werden.

Die Erfindung betrifft weiterhin eine Vorrichtung zur mechanischen Aufbereitung eines Materialstromes von zu recycelnden, insbesondere Metall enthaltenden Verbundstoffen mit mindestens einem Grobgranulator und mindestens einer dem Grobgranulator nachgeschalteten Aufschließeinheit und einer Mehrzahl von Förder- sowie Separierungseinrichtungen.

Metall enthaltende Verbundstoffe, also Metalle, die mehr oder minder eng mit anderen Materialien verbunden und die beispielsweise beschichtet, bedampft, koexdrodiert oder verschweißt sind, bedürfen einer besonderen Behandlung, um von diesen Schichten befreit zu werden. Hierbei ist insbesondere auch an Kabel und Drähte zu denken, die im Verbund mit grobem Schrott angeliefert werden.

Aus der EP 0 751 831 B1 ist ein Verfahren und eine Vorrichtung zum Behandeln von Verbundelementen bekannt. Bei diesem Verfahren wird ein Verbundelemente aufweisender Materialstrom einem Grobzerkleinerer zugeführt und in Teile zwischen 5 und 30 mm Korngröße vorzerkleinert. Die vorzerkleinerten Teile werden in einer Aufschließeinheit feinzerkleinert und aufgeschlossen, d. h. in ihre einzelnen Bestandteile zerlegt und als Gemisch einer weiteren Bearbeitung zugeführt.

Nachteilig bei dem bekannten Verfahren ist, daß der gesamte Materialstrom über die Aufschließeinheit geführt wird, so daß die Aufschließeinheit entsprechend voluminös ausgebildet sein muß und die Aufschließeinheit entsprechend teuer ist.

Aufgabe der vorliegenden Erfindung ist es daher, das bekannte Verfahren so zu verbessern, daß die Kosten für die teure Aufschließeinheit reduziert werden können.

Diese Aufgabe wird erfindungsgemäß dadurch gelöst, daß vor dem Feinzerkleinern der Materialstrom von einem Windsichter in eine schwere Grobfraktion und eine leichte Feinfraktion aufgeteilt wird, die getrennt weiter behandelt werden.

Durch die Trennung des Materialstromes ist der Einsatz von kleineren und preisgünstigeren Aufschließeinheiten möglich. Durch die Klassifizierung des vorzerkleinerten Materials in eine Grobfraktion und eine Feinfraktion ist es zudem möglich, das Material auf verschiedene Arten weiterzubehandeln.

Gemäß einer bevorzugten Ausführungsform der Erfindung wird zur Grobzerkleinerung der Materialstrom in einer Rotorschere vorzerkleinert und in mindestens einem nachfolgenden Grobgranulator grob zerkleinert.

Durch die Vorzerkleinerung in einer Rotorschere wird der Materialstrom zum einen aufgelockert und zum anderen werden dem Grobgranulator nur Teile zugeführt, die eine bestimmte Größe nicht überschreiten, so daß der Grobgranulator einen geringeren Verschleiß aufweist und kostengünstiger gestaltet werden kann.

Nach einer weiteren bevorzugten Ausführungsform der Erfindung wird der Materialstrom in zwei parallel angeordneten Grobgranulatoren grob zerkleinert.

Durch die Verwendung zweier parallel angeordneter Grobgranulatoren ist die Verwendung kostengünstiger kleinerer Grobgranulatoren möglich. Durch die Verwendung von zwei parallelen Granulatoren kann auch flexibler auf unterschiedlich anfallende Materialmengen reagiert werden. Bei geringeren Materialströmen kann beispielsweise zum Sparen von Energie ein Grobgranulator abgeschaltet werden. Außerdem können an einem Grobgranulator Reparaturen durchgeführt werden, während der andere Grobgranulator weiter in Betrieb bleibt.

Gemäß einer weiteren bevorzugten Ausführungsform der Erfindung wird die Feinfraktion in zwei einander parallel angeordneten Beschleunigern bzw. Aufschließeinheiten, die als Rotoren ausgebildet sind, feinzerkleinert und aufgeschlossen.

Durch die Trennung des Materialstroms in die Feinfraktion und die Grobfraktion und durch den Einsatz von zwei parallel arbeitenden Rotoren ist auch hier der Einsatz von kleineren, preis- und kostengünstigeren Rotoren möglich. Auch hier kann durch den Einsatz von zwei parallel arbeitenden Rotoren an einem Rotor gearbeitet und über den anderen Rotor weiterhin produziert werden. Ein totaler Stillstand durch Störung oder Wartungsarbeiten kann so vermieden werden. Die Kosten für Ersatz- und Verschleißteile sind durch den Einsatz kleinerer, handelsüblicher Aggregate geringer. Die Energiekosten sinken, wie bereits angedeutet, durch die nun mögliche stufenweise Zuschaltung der verschiedenen Aggregate bei unterschiedlichen Materialmengen.

Nach einer weiteren bevorzugten Ausführungsform der Erfindung wird die Grobfraktion in mindestens einem Feingranulator aufgeschlossen.

Bei der Grobfraktion handelt es sich in erster Linie um Materialien, die gesteckt, geschraubt, gepreßt oder ähnlich miteinander verbunden sind. Diese Materialien müssen nicht mit Hilfe des Rotors getrennt werden, bei ihnen reicht in der Regel der Aufschluß durch einfaches Schreddern in einem Feingranulator. Durch ein Abgreifen der Grobfraktion vor dem Rotor lassen sich notwendige Größe, Antriebsleistung, Reparaturanfälligkeit und der Verschleiß des Rotors der Feinfraktion deutlich senken. Die Grobfraktion kann im kostengünstigen Feingranulator aufbereitet werden und muß nicht in einem kostenintensiveren Rotor behandelt werden. Dadurch ist eine Kostensenkung für diese Stoffe bis zu 50 % möglich.

Auch ist es möglich, zwei Feingranulatoren parallel nebeneinander anzuordnen.

Weitere Aufgabe der Erfindung ist es, die aus der EP 0751 831 B1 bekannte Vorrichtung so zu verbessern, daß das Verfahren zur mechanischen Aufbereitung von Verbundstoffen effektiver und kostengünstiger durchgeführt werden kann.

Diese Aufgabe wird dadurch gelöst, daß zwischen Grobgranulator und Aufschließeinheit ein Windsichter angeordnet ist, durch den der Materialstrom gewichtsabhängig in eine Feinfraktion und eine Grobfraktion aufteilbar ist.

Dadurch, daß der Aufschließeinheit ein Windsichter vorgelagert ist, der den Materialstrom gewichtsabhängig in zwei Fraktionen aufteilt, lassen sich kleinere und kostengünstigere Aufschließeinheiten verwenden.

Nach einer bevorzugten Ausführungsform der Erfindung sind dem Windsichter für die beiden Fraktionen jeweils mindestens eine Aufschließeinheit nachgeschaltet, über die die Fraktionen unabhängig von einander weiter verarbeitbar sind.

Dadurch, daß den beiden Fraktionen eigene Aufschließeinheiten nachgeschaltet sind, lassen sich kostengünstige auf die Fraktionen abgestimmte unterschiedliche Aufschließeinheiten verwenden.

Gemäß einer weiteren bevorzugten Ausführungsform der Erfindung ist die der Feinfraktion zugeordnete Aufschließeinheit als Rotor ausgebildet.

Die Feinfraktion, bei der es sich in erster Linie um Material handelt, das eloxiert, lackiert, koexdrodiert, bedampft oder auf ähnliche Weise verbunden ist, wird über den Rotor aufgeschlossen, der kleiner und kostengünstiger gestaltet sein kann, da er nicht mit der Grobfraktion belastet werden muß.

Nach einer weiteren bevorzugten Ausführungsform der Erfindung ist die der Grobfraktion zugeordnete Aufschließeinheit als Feingranulator ausgebildet.

Da es sich bei der Grobfraktion in erster Linie um Materialien handelt, die gesteckt, geschraubt, gepreßt oder ähnlich miteinander verbunden sind, werden diese durch einfaches Schreddern in dem kostengünstigen Feingranulator aufgeschlossen.

Gemäß einer weiteren bevorzugten Ausführungsform der Erfindung weist der Windsichter eine Verteilerkammer auf, die in vertikaler Richtung unten ein Gitter aufweist, über das der Materialstrom leitbar ist, wobei der Windsichter von unten nach oben mit einer Luftströmung beaufschlagbar ist, durch die die leichteren Materialteile, die die Feinfraktion bilden, angehoben und aus dem Windsichter herausgeblasen werden können. In einem oberen Bereich ist der vertikale Luftstrom in eine horizontale Richtung umlenkbar. Durch den Windsichter ist es möglich, den Materialstrom gewichtsabhängig in zwei Fraktionen aufzuteilen, wobei die leichtere Feinfraktion von einer vertikalen Luftströmung angehoben und durch eine horizontale Ablenkung der Luftströmung ausgeblasen wird, während die schwerere Grobfraktion im Bodenbereich verbleibt und zu einer Öffnung transportiert wird.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

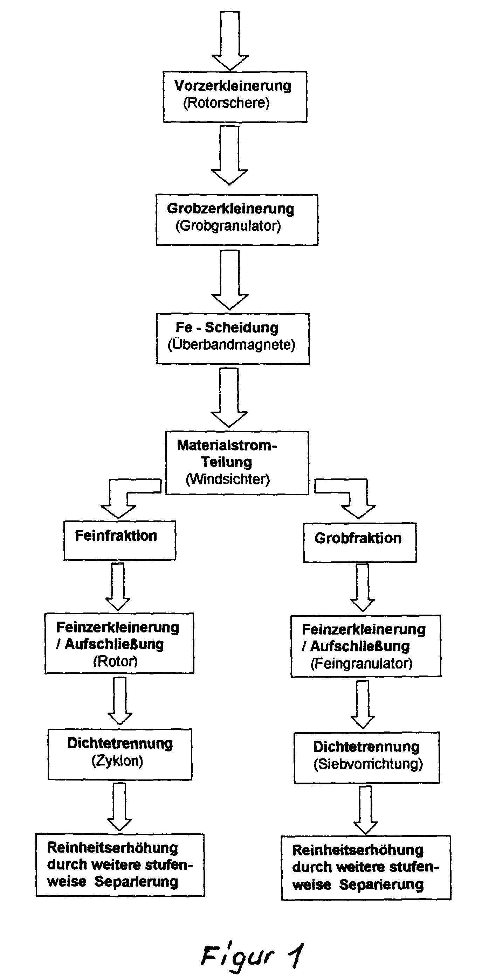

- Figur 1:: Ein vereinfachtes Blockfließschema einer Vorrichtung zur mechanischen Aufbereitung von Verbundstoffen,

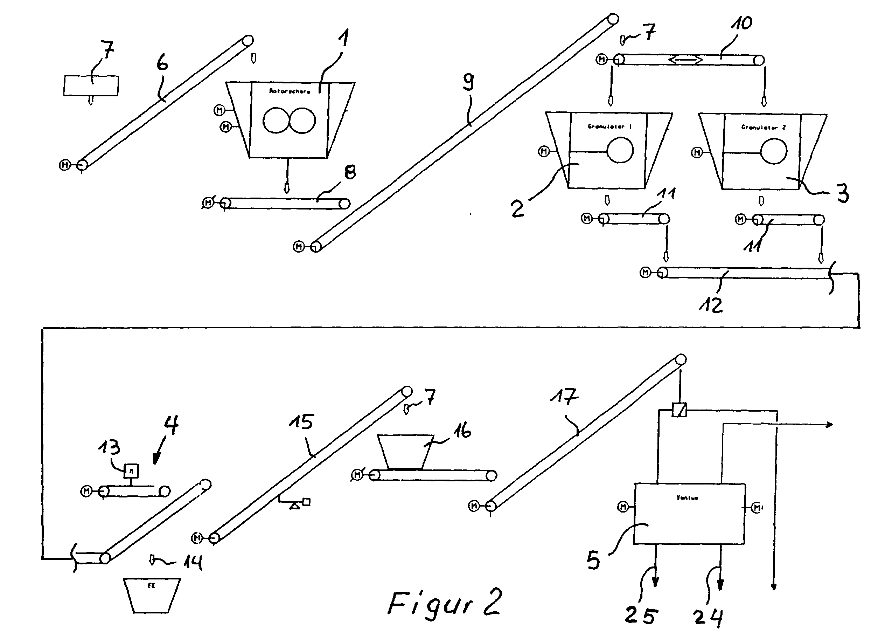

- Figur 2:: eine schematische Darstellung des Materialstromes mit Vorzerkleinerung, Grobzerkleinerung, FE-Scheidung und Materialstromteilung,

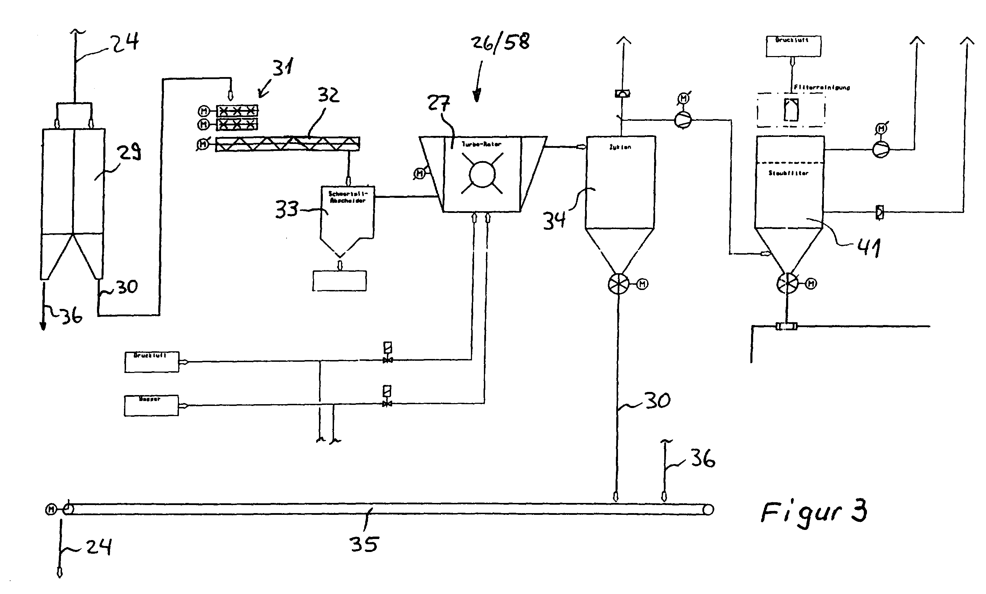

- Figur 3:: eine vereinfachte Darstellung eines ersten Rotors zur Aufschließung der Feinfraktion von Figur 2 mit nachgeschaltetem Zyklon, Staubfilter und Förderband,

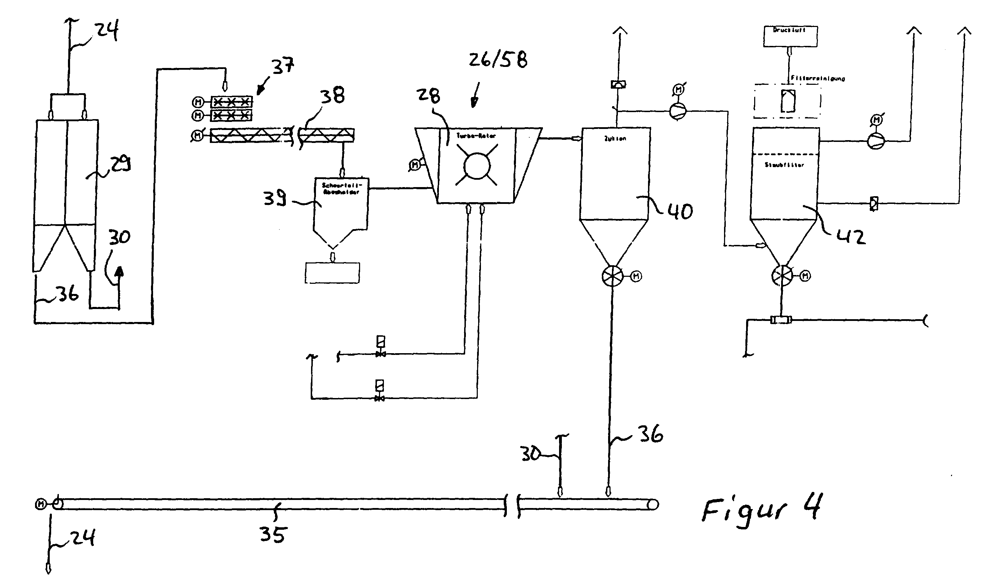

- Figur 4:: eine schematische Darstellung eines zweiten Rotors, der parallel zum ersten Rotor der Figur 3 angeordnet ist,

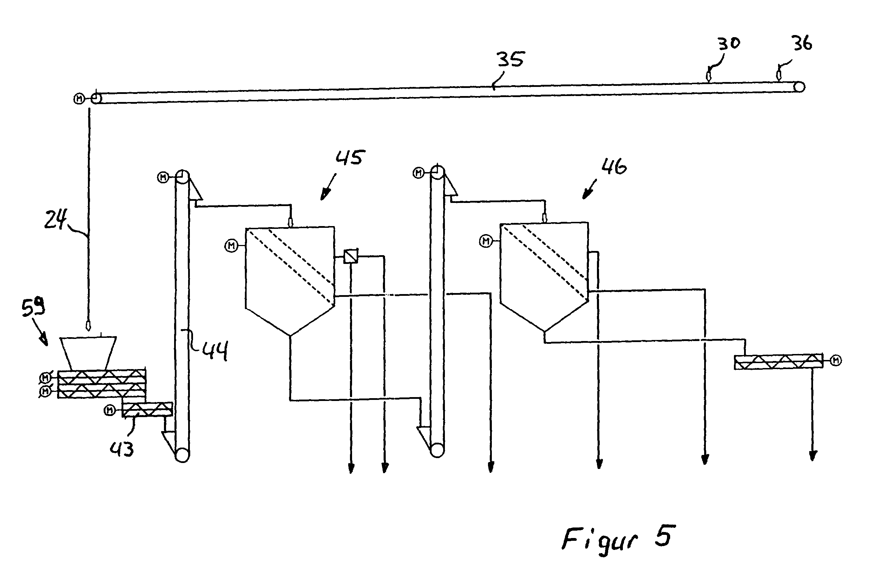

- Figur 5:: eine schematische Darstellung der den Vorrichtungsteilen von Figur 3 und 4 nachgeordneten weiteren Separierungsstufen,

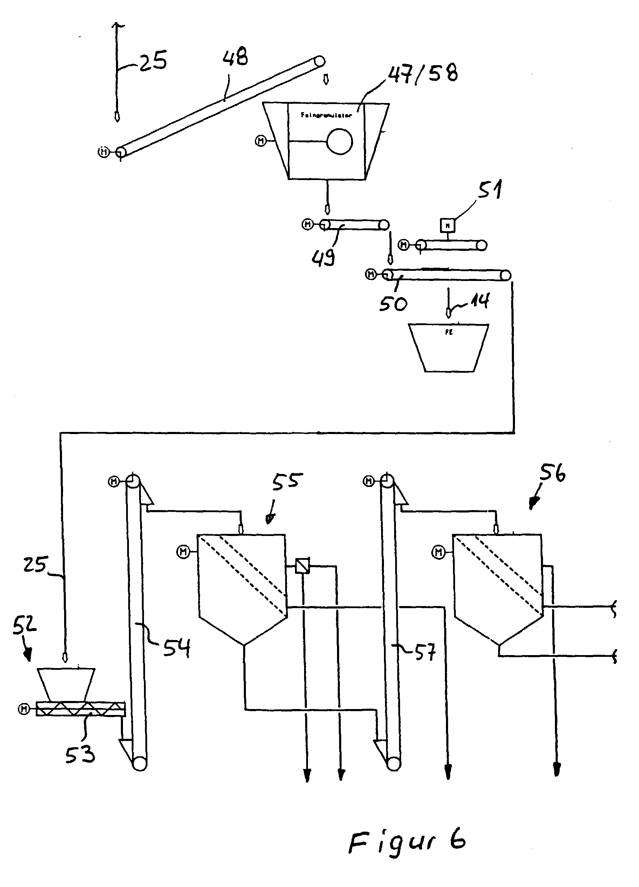

- Figur 6:: eine schematische Darstellung der Bearbeitung der Grobfraktion von Figur 2 mit Fördervorrichtung, Feingranulator, Überbandmagneten und nachgeschalteter Siebvorrichtung und

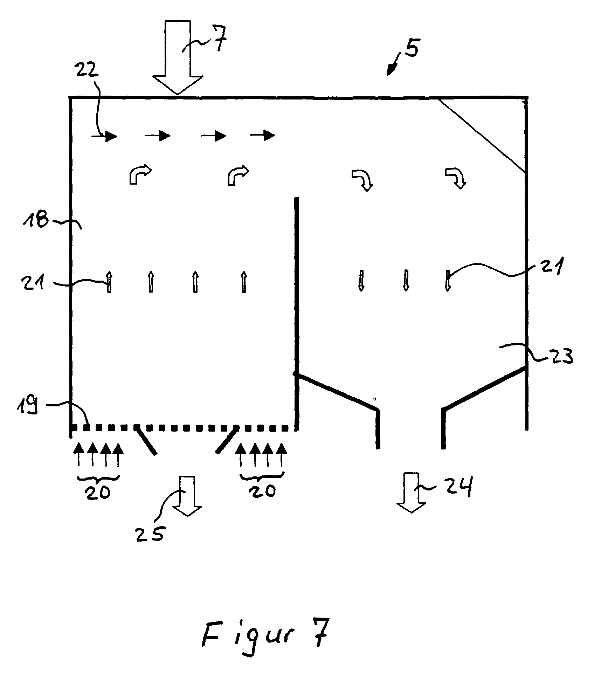

- Figur 7:: eine schematische Schnittdarstellung eines Windsichters.

Eine Vorrichtung zur mechanischen Aufbereitung von Verbundstoffen besteht im wesentlichen aus einer Rotorschere (1), einem ersten Grobgranulator (2), einem zweiten Grobgranulator (3), einer FE-Scheidevorrichtung (4) und einem Windsichter (5).

Der Rotorschere (1) wird über eine Fördervorrichtung, die als erstes Förderband (6) ausgebildet ist, ein Materialstrom (7) zugeführt. In der Rotorschere (1) wird der Materialstrom (7) in Längen zwischen etwa 40 mm und etwa 80 mm vorzerkleinert.

Der Rotorschere (1) nachgeordnet sind die Grobgranulatoren (2, 3). Der Materialstrom (7) wird von der Rotorschere über ein zweites Förderband (8) und ein drittes Förderband (9) zu den Grobgranulatoren (2, 3) gefördert. Ein viertes Förderband (10) fördert den Materialstrom (7) zu dem ersten Grobgranulator (2) bzw. zu dem zweiten Grobgranulator (3). In den Grobgranulatoren (2, 3) werden die Teile des Materialstromes (7) auf eine Länge zwischen etwa 10 mm und etwa 40 mm grob zerkleinert. Über Förderbänder (11) wird der Materialstrom (7) der parallel angeordneten Grobgranulatoren (2, 3) zu einem ersten Selektionsband (12) gefördert.

Am Ende des ersten Selektionsbandes (12) ist die FE-Scheidevorrichtung (4) angeordnet. Hier werden durch Überbandmagnete (13) Eisenbestandteile (14) aus dem Materialstrom (7) aussortiert. Damit bleiben lediglich andere Metalle im Materialstrom (7) zurück, die weiter behandelt werden. Vom ersten Selektionsband (12) wandern die verbleibenden Teile des Materialstromes (7) auf ein Pufferband (15). In diesem Pufferband (15) werden die Teile des Materialstromes (7) in mechanische Schwingungen versetzt, so daß sich grobere Teile von feineren Staubteilen trennen. Die Staubteile werden in entsprechenden Sieben (16) abgesiebt. Der verbleibende Materialstrom (7) wird über ein weiteres Förderband (17) zu dem Windsichter (5) gefördert.

Der Windsichter (5) weist eine Verteilerkammer (18) auf, in die der Materialstrom (7) eingeleitet wird. An ihrem in vertikaler Richtung unteren Ende weist die Verteilerkammer (18) ein Gitter (19) auf, über das der Materialstrom (7) leitbar ist. Der Windsichter (5) bzw. die Verteilerkammer (18) ist von unten nach oben mit einer Luftströmung (20) beaufschlagbar. Die leichteren Materialteile (21) werden angehoben, von einer Querströmung (22) abgelenkt und über eine Auslaßkammer (23) als Feinfraktion (24) ausgeblasen. Die schwereren Teile des Materialstromes (7) fallen aufgrund ihres Eigengewichtes bzw. ihrer Dichte nach unten als Grobfraktion (25) aus der Verteilerkammer (18) heraus.

Zur Weiterverarbeitung der Grobfraktion (25) sind dem Windsichter (5) zwei zueinander parallel angeordnete Aufschließeinheiten (58) bzw. Beschleuniger (26) nachgeordnet. Die Beschleuniger (26) sind als ein erster Rotor (27) und als ein paralleler zweiter Rotor (28) ausgebildet.

Die Feinfraktion (24) wird von dem Windsichter (5) zu einem Teiler (29) gefördert. Ein erster Teilstrom (30) der Feinfraktion (24) wird über Siebdecks (31) und eine Förderschnecke (32) zu einem an Ende der Förderschnecke (32) angeordneten Schwerteil-Abscheider (33) gefördert. Der verbleibenden Teil des ersten Teilstromes (30) wird dem ersten Rotor (27) zugeleitet. In dem ersten Rotor (27) wird der erste Teilstrom (30) weiter zerkleinert und aufgeschlossen und einem nachgeordneten Zyklon (34) zugeführt. In dem Zyklon (34) werden die verbleibenden Teile des ersten Teilstromes (30) in Drehbewegungen versetzt. Dabei fallen die schweren Teile nach außen hinaus, während die leichten Teile in der Mitte absinken und auf einem Förderband (35) weitergefördert werden.

Von dem Teiler (29) geht ein zweiter Teilstrom (36) über Siebdecks (37), Förderschnecke (38), Schwerteilabscheider (39) zu dem zweiten Rotor (28) und weiter über einen Zyklon (40) zu dem Förderband (35). Die Zyklone (34, 40) sind zur Staubabsaugung mit Staubfiltern (41, 42) verbunden. Der verbleibende Teil der Feinfraktion (24) wird über das Förderband (35) weiteren Separierungsstufen zugeführt. So schließen sich an das Förderband (35) weitere Siebdecks (59) an, wobei der verbleibende Teil der Feinfraktion (24) über eine Förderschnecke (43) und einem Förderer (44) zu einer als Siebvorrichtung (45) ausgebildeten Separationsvorrichtung gefördert wird. Der Siebvorrichtung (45) ist eine weitere Siebvorrichtung (46) nachgeordnet. Zur weiteren stufenweisen Separierung können weitere Separierungseinrichtungen nachgeordnet werden.

Zur Weiterverarbeitung der Grobfraktion ist dem Windsichter (5) ein Feingranulator (47) nachgeordnet. Die Grobfraktion (25) wird dem Feingranulator (47) über ein Förderband (48) zugeführt. In dem Feingranulator (47) wird die Grobfraktion (25) zerkleinert und aufgeschlossen und über ein Förderband (49) einem Selektionsband (50) zugeführt, bei dem durch Überbandmagnete (51) Eisenbestandteile bzw. Fe-Metalle (14) aussortiert werden. Anschließend wird der verbleibende Teil der Grobfraktion (25) einem Siebdeck (52) zugeführt und über eine Förderschnecke (53) und einem Förderer (54) einer als Siebvorrichtung (55) ausgebildeten Separationsvorrichtung zugeführt.

An die Siebvorrichtung (55) schließt sich eine zweite Siebvorrichtung (56) an, die über einen zweiten Förderer (57) mit der ersten Siebvorrichtung verbunden ist. Zur weiteren Separierung können noch weitere Separiervorrichtungen nachgeschaltet werden. An den Feingranulator (47) schließt sich eine Separierung an, die ähnlicherweise verläuft, wie die Separierung der Feinfraktion, nämlich zunächst findet eine Trennung nach Kunststoff und Metallteilen statt. Darüber hinaus findet auch im Feingranulator eine Trennung von schweren und leichten Kunststoffteilen und eine Trennung nach schweren und leichten Metallteilen statt. Maßstab ist die jeweiligen Dichte der zu trennenden Materialien.

Schließlich kann noch eine weitere Trennung der Feinstoffe im Wege elektrostatischer Trennung vorgenommen werden. Dabei wird das Gemisch von Metallen und Kunststoffen induktiv aufgeladen. Der Ladungsabbau der einzelnen Teile erfolgt unterschiedlich schnell bei Kunststoffen und Metallen, je nach deren Elektizitätskonstanten.

Nicht vermarktungsfähige Kunststoffe werden im Regelfall thermisch verwertet, in dem sie zum Beispiel in einem nicht dargestellten Drehrohrofen verschwelt werden. Schließlich kann das entstehende Gas noch gereinigt werden und anschließend an Gasunternehmen als Brenngas verkauft werden. Es ist auch möglich, das entstehende Gas in einem Gasmotor zu verstromen, also in elektrische Energie umzuwandeln.

Verwertungsfähige Kunststoffe werden als Fertigprodukte einem Extrusionsprozeß unterworfen oder als Regranulat verkauft.

## Patentansprüche

1. Verfahren zur mechanischen Aufbereitung eines Materialstromes von zu recycelnden, insbesondere Metall enthaltenden Verbundstoffen, bei dem in einem ersten Schritt die Verbundstoffe grob zerkleinert und in folgenden weiteren Schritten fein zerkleinert und getrennt werden, dadurch gekennzeichnet, daß vor dem Feinzerkleinern der Materialstrom (7) von einem Windsichter (5) in eine schwere Grobfraktion (25) und eine leichte Feinfraktion (24) aufgeteilt wird, die getrennt weiter behandelt werden.

2. Verfahren nach Anspruch 1, dadurch gekennzeichnet, daß nach der Grobzerkleinerung Fe-Metalle (14) aussortiert werden.

3. Verfahren nach Anspruch 2, dadurch gekennzeichnet, daß die Fe-Metalle (14) durch Überbandmagneten (13) auf einem ersten Selektionsband (12) aussortiert werden.

4. Verfahren nach einem der Ansprüche 1 bis 3, dadurch gekennzeichnet, daß zur Grobzerkleinerung der Materialstrom in einer Rotorschere (1) vorzerkleinert wird.

5. Verfahren nach einem der Ansprüche 1 bis 4, dadurch gekennzeichnet, daß der Materialstrom (7) in mindestens einem Grobgranulator (2, 3) grob zerkleinert wird.

6. Verfahren nach Anspruch 5, dadurch gekennzeichnet, daß der Materialstrom (7) in zwei parallel angeordneten Grobgranulatoren (2, 3) grob zerkleinert wird.

7. Verfahren nach einem der Ansprüche 1 bis 6, dadurch gekennzeichnet, daß den Grobgranulatoren (2, 3) das Selektionsband (12) nachgeschaltet ist, von dem der Materialstrom (7) zu einem Pufferband (15) transportiert wird.

8. Verfahren nach Anspruch 7, dadurch gekennzeichnet, daß der Materialstrom (7) auf dem Pufferband (15) in mechanische Schwingungen versetzt wird, so daß sich grobere Teile von feineren Staubteilen trennen.

9. Verfahren nach Anspruch 8, dadurch gekennzeichnet, daß die Staubteile in entsprechenden Sieben abgesiebt werden.

10. Verfahren nach einem der Ansprüche 1 bis 9, dadurch gekennzeichnet, daß die Feinfraktion (24) in mindestens einem Beschleuniger (26) aufgeschlossen wird.

11. Verfahren nach Anspruch 10, dadurch gekennzeichnet, daß die Feinfraktion (24) in zwei einander parallel angeordneten Beschleunigern (26) aufgeschlossen wird.

12. Verfahren nach Anspruch 10 oder 11, dadurch gekennzeichnet, daß die Beschleuniger (26) als Rotoren (27, 28) ausgebildet sind.

13. Verfahren nach einem der Ansprüche 10 bis 12, dadurch gekennzeichnet, daß nach dem Aufschließen der Feinfraktion (24) in einem nachgeschalteten Zyklon (34, 40) eine weitere gewichtsabhängige Separierung erfolgt.

14. Verfahren nach einem der Ansprüche 1 bis 13, dadurch gekennzeichnet, daß die Grobfraktion (25) in mindestens einem Feingranulator (47) aufgeschlossen wird.

15. Verfahren nach Anspruch 14, dadurch gekennzeichnet, daß die Grobfraktion (25) in zwei einander parallel angeordneten Feingranulatoren (47) aufgeschlossen wird.

16. Verfahren nach einem der Ansprüche 10 bis 15, dadurch gekennzeichnet, daß die aufgeschlossenen Materialströme von Fein- (24) und Grobfraktion (25) in Kunststoff- und Metallteile getrennt werden.

17. Verfahren nach Anspruch 16, dadurch gekennzeichnet, daß die aufgeschlossenen Materialströme nach ihrer Dichte weiter separiert werden.

18. Verfahren nach Anspruch 16 oder 17, dadurch gekennzeichnet, daß die aufgeschlossenen Materialströme elektrostatisch getrennt werden.

19. Vorrichtung zur mechanischen Aufbereitung eines Materialstromes (7) von zu recycelnden, insbesondere Metall enthaltenden Verbundstoffen mit mindestens einem Grobgranulator (2, 3) und mindestens einer dem Grobgranulator (2, 3) nachgeschalteten Aufschließeinheit (58) und einer Mehrzahl von Förder- sowie Separierungseinrichtungen, dadurch gekennzeichnet, daß zwischen Grobgranulator (2, 3) und Aufschließeinheit (58) ein Windsichter angeordnet ist, durch den der Materialstrom (7) gewichtsabhängig in eine Feinfraktion (24) und eine Grobfraktion (25) aufteilbar ist.

20. Vorrichtung nach Anspruch 19, dadurch gekennzeichnet, daß dem Windsichter (5) für die beiden Fraktionen (24, 25) jeweils mindestens eine Aufschließeinheit (58) nachgeschaltet ist, über die die Fraktionen (24, 25) unabhängig voneinander weiterverarbeitbar sind.

21. Vorrichtung nach Anspruch 20, dadurch gekennzeichnet, daß die der Feinfraktion (24) zugeordnete Aufschließeinheit (58) als Beschleuniger (26) ausgebildet ist.

22. Vorrichtung nach Anspruch 20, dadurch gekennzeichnet, daß der Beschleuniger (26) als Rotor (27, 28) ausgebildet ist.

23. Vorrichtung nach einem der Ansprüche 20 bis 22, dadurch gekennzeichnet, daß die der Grobfraktion (25) zugeordnete Aufschließeinheit (58) als Feingranulator (47) ausgebildet ist.

24. Vorrichtung nach einem der Ansprüche 19 bis 23, dadurch gekennzeichnet, daß dem Grobgranulator (2, 3) eine Rotorschere (1) zur Vorzerkleinerung des Materialstromes (7) vorgelagert ist.

25. Vorrichtung nach einem der Ansprüche 19 bis 24, dadurch gekennzeichnet, daß der Windsichter (5) eine Verteilerkammer (18) aufweist, die in vertikaler Richtung unten ein Gitter (19) aufweist, über das der Materialstrom (7) leitbar ist, und daß der Windsichter (5) von unten nach oben mit einer Luftströmung (20) beaufschlagbar ist, durch die die leichteren Materialteile, die die Feinfraktion (24) bilden, angehoben und aus dem Windsichter (5) herausgeblasen werden können.

26. Vorrichtung nach Anspruch 25, dadurch gekennzeichnet, daß die vertikale Luftströmung (20) in einem oberen Bereich von einer Querströmung (22) in eine horizontale Richtung umlenkbar ist.

27. Vorrichtung nach Anspruch 26, dadurch gekennzeichnet, daß die Querströmung (22) in einer Auslaßkammer (23) nach unten ableitbar ist.

28. Vorrichtung nach einem der Ansprüche 1 bis 27, dadurch gekennzeichnet, daß Staubpartikel über Staubfilter (41, 42) absaugbar sind.
